# EUROPEAN PATENT APPLICATION

(11) **EP 4 818 005 A1**
(43) Date of publication of application: **07.10.2026**
(21) Application number: 25193323.0
(22) Date of filing: 01.08.2025
(51) Int. Cl.: B62D 25/20, B60K 1/04, A61G 3/06

(54) **VEHICLE HAVING RAMP APPARATUS**

(30) Priority: 02.04.2025 KR 20250042671
(71) Applicant: Hyundai Motor Company, Seoul 06797 (KR); Kia Corporation, Seoul 06797 (KR)
(72) Inventor: CHO, Kyu Hoon, 18280 Hwaseong-si, Gyeonggi-do (KR); PARK, Guk Mu, 18280 Hwaseong-si, Gyeonggi-do (KR); SONG, Dae Hun, 18280 Hwaseong-si, Gyeonggi-do (KR); KANG, Seung Min, 18280 Hwaseong-si, Gyeonggi-do (KR); KWON, Hyuk Ho, 18280 Hwaseong-si, Gyeonggi-do (KR); KUM, Dong Il, 18280 Hwaseong-si, Gyeonggi-do (KR); LEE, Jae Seung, 18280 Hwaseong-si, Gyeonggi-do (KR); CHOI, Ki Hyun, 18280 Hwaseong-si, Gyeonggi-do (KR)
(74) Representative: Isarpatent

(57) **Abstract**

A vehicle can include a floor panel coupled to a pair of side sills spaced apart from each other, a battery coupled to the pair of the side sills and positioned below the floor panel, a ramp apparatus positioned on the floor panel and coupled to at least the side sills, and seat rails positioned on the ramp apparatus and coupled to the ramp apparatus. Alternatively by omitting the floor panel, a vehicle can include a battery coupled to a pair of side sills, a ramp apparatus positioned on the battery and coupled to at least the side sills, and seat rails positioned on the ramp apparatus and coupled to the ramp apparatus.

## Description

### TECHNICAL FIELD

The present disclosure relates to a vehicle equipped with a ramp apparatus.

### BACKGROUND

For example, buses, or wheelchair-specific vehicles for disabled persons may include a ramp apparatus assisting in the boarding and disembarking of a disabled person in a wheelchair. The ramp apparatus is equipped with a platform that is stored in the vehicle body, and the platform is configured to be tilted at a certain incline with respect to the ground by being deployed from the vehicle body to the ground, manually by a user or automatically by a motor.

On the other hand, vehicles that use a motor as a driving source, such as hybrid vehicles or electric vehicles, use a high-voltage battery or the like as an energy source for driving the motor, and a battery module including multiple battery cells is mounted on the vehicle body at the bottom of the vehicle. If a ramp apparatus for a wheelchair is mounted on the vehicle, the ramp apparatus interferes with the layout of the battery module because it is mainly mounted on the bottom of the vehicle, and cannot be applied.

To solve this issue, if the ramp apparatus is disposed on the floor panel of the vehicle body, the step height increases, making it inconvenient for passengers to get on and off. In addition, because the height of the ramp apparatus from the ground may be relatively high, it may be difficult for the inclination of the platform to satisfy the inclination of a regulation (for example, 7.1°), and there may be a disadvantage, in that the step difference between the platform and the interior floor may be excessive.

### SUMMARY

The present disclosure relates to a vehicle equipped with a ramp apparatus for assisting in boarding and disembarking of a wheelchair.

An embodiment of the present disclosure can provide a vehicle in which a ramp apparatus may be installed without interference with the layout of a battery module.

An embodiment of the present disclosure can provide a vehicle in which strength of the vehicle body and support for side collisions may be reinforced.

An embodiment of the present disclosure can provide a vehicle capable of maintaining and/or improving the convenience of boarding and disembarking passengers by ensuring that the inclination of a platform satisfies the inclination of a regulation without increasing a step height.

According to an embodiment of the present disclosure, a vehicle can include: a floor panel coupled to a pair of side sills spaced apart from each other; a battery module coupled to the pair of the side sills and positioned below the floor panel; a ramp apparatus positioned on the floor panel and coupled to at least the side sills; and a plurality of seat rails positioned on the ramp apparatus and coupled to the ramp apparatus.

The floor panel may include a recess portion formed concavely downward. At least one of the pair of side sills may have a concave portion formed with an upper surface being lower in a middle portion of that side sill. The ramp apparatus may be seated in the recess portion.

The recess portion may have a depth of the same dimension as a height of a housing of the ramp apparatus.

The floor panel may include a first flat surface provided as a bottom surface of the recess portion, and a second flat surface provided as an upper surface other than the recess portion. An upper surface of the ramp apparatus and the second flat surface may be disposed at the same height from a ground.

A plurality of the seat rails may extend in a longitudinal direction of the vehicle across the ramp apparatus. The seat rails may be provided with connecting brackets on both side surfaces, and may be coupled to the ramp apparatus via the connecting brackets.

The ramp apparatus may include: a housing; a plurality of reinforcing rails connected to an upper surface of the housing; and a plurality of connecting rails coupled to the upper surface of the housing on both sides of the reinforcing rails.

The seat rails may be disposed on the upper surface of the housing in parallel to the reinforcing rail with the connecting rails interposed therebetween, and may be provided with connecting brackets on both side surfaces. The connecting brackets may be inserted into the connecting rails and may be bolted to the housing, together with the connecting rails. The plurality of seat rails, the plurality of reinforcing rails, and the plurality of connecting rails may be disposed in a grid shape.

The vehicle may include a pair of first cross members coupled to a lower surface of the floor panel while connecting the pair of side sills. The recess portion may be located between the pair of first cross members. The reinforcing rails may have ends protruding from the housing on both sides of the housing, and the ends on both sides may be coupled to the first cross members.

A side wall of the housing may be provided with a mounting bracket having a bolt hole formed therein. The first cross members may be provided with a plurality of bulkheads having bolt holes formed therein and spaced apart from each other. The reinforcing rails, the mounting bracket, and the bulkheads may be together bolted to the floor panel.

The housing may have an upper case, a lower case, and a guide rail formed of an extruded material. The guide rail may be bolted to the mounting bracket together with a side wall of the upper case and a side wall of the lower case.

The vehicle may further include at least one reinforcing cross member positioned in the recess portion on the floor panel and having both ends connected to the side sills, respectively.

The ramp apparatus may include a housing, and at least one channel portion formed on a lower surface of the housing and receiving the reinforcing cross member.

The channel portion may be provided with an adhesive applied thereto, so that the reinforcing cross member and the channel portion are joined.

The channel portion may include at least one insertion hole, and a nut portion welded in a position corresponding to the insertion hole. The nut portion may be fastened to a bolt penetrating the battery module and the reinforcing cross member.

According to an embodiment of the present disclosure, a vehicle can include: a battery module coupled to a pair of side sills; a ramp apparatus positioned on the battery module and coupled to at least the side sills; and a plurality of seat rails positioned on the ramp apparatus and coupled to the ramp apparatus.

The ramp apparatus may include: a housing; a plurality of reinforcing rails coupled to an upper surface of the housing; and a plurality of connecting rails coupled to the upper surface of the housing, on both sides of the reinforcing rail.

The seat rails may be disposed on the upper surface of the housing, in parallel to the reinforcing rails, with the connecting rails interposed therebetween, and may be provided with a connecting bracket on both side surfaces. The connecting bracket may be inserted into the connecting rails and may be bolted to the housing together with the connecting rails.

The vehicle may include a pair of first cross members connecting the pair of side sills and coupled to an upper surface of the battery module. The ramp apparatus may be located between the pair of first cross members. The reinforcing rails may have ends protruding from the housing on both sides of the housing, and the ends on both sides may be coupled to the first cross members.

A side wall of the housing may be provided with a mounting bracket having a bolt hole. The first cross members may be provided with a plurality of bulkheads having bolt holes formed therein and spaced apart from each other. The reinforcing rails, the mounting bracket, and the bulkheads may be bolted to each other.

The vehicle may further include at least one reinforcing cross member disposed on the ramp apparatus and having both ends coupled to the side sills respectively. The ramp apparatus may include at least one channel portion provided on a lower surface of the housing and accommodating the reinforcing cross member.

### BRIEF DESCRIPTION OF THE DRAWINGS

The above and other features and advantages of example embodiments of the present disclosure can be more clearly understood from the following detailed description, taken in conjunction with the accompanying drawings, in which:
FIG. 1 is a perspective view illustrating a main part of a vehicle according to an embodiment of the present disclosure;
FIG. 2 is a side view of FIG. 1;
FIG. 3 is a perspective view illustrating a main part of a vehicle, in which a ramp apparatus and a seat rail in FIG. 1 are omitted, according to an embodiment of the present disclosure;
FIG. 4 is a perspective view and an enlarged cross-sectional view illustrating part A of FIG. 3 cut away;
FIG. 5 is a perspective view of FIG. 1 seen from below;
FIG. 6 is a perspective view the same as FIG. 5 but with the battery of FIG. 5 omitted;
FIG. 7 is a cross-sectional view taken along line B-B' of FIG. 6;
FIG. 8 is a diagram illustrating an operating status of a ramp apparatus according to an embodiment of the present disclosure;
FIG. 9 is a perspective view illustrating a ramp apparatus and a seat rail according to an embodiment of the present disclosure;
FIG. 10 is an enlarged cross-sectional view illustrating portion C of FIG. 1;
FIG. 11 is a cross-sectional view taken along line D-D' of FIG. 1;
FIG. 12 is a perspective view of FIG. 9 as viewed from below; and
FIG. 13 is a cross-sectional view corresponding to FIG. 11, illustrating a main part of a vehicle according to another embodiment of the present disclosure.

### DETAILED DESCRIPTION OF ILLUSTRATIVE EMBODIMENTS

Hereinafter, example embodiments of the present disclosure will be described in detail through example drawings. When adding reference numerals to components of respective drawings, same components can be given same numerals as much as possible even if they are illustrated in different drawings.

A vehicle can refer to various vehicle types that can move a transported object such as a person, an animal, or an object from a starting point to a destination. Such vehicles are not necessarily limited to vehicles that run on roads or tracks.

In this specification, for the convenience of explanation, example embodiments of the present disclosure are described using a vehicle having a motor that receives power from a battery, such as a hybrid vehicle or an electric vehicle, as an example, but the present disclosure is not necessarily limited thereto.

In this specification, the terms "first", "second", etc., may be used to describe various components, but these components are not necessarily limited in terms of order, size, location, or importance by the terms "first", "second", etc., and can be named with such adjectives merely for the purpose of distinguishing one component from another.

In this specification, the terms "on," "below," "upper," "lower," "left and right," "inner," "outer," "front," "rear," etc. can be used in relation to direction based on the vehicle or body.

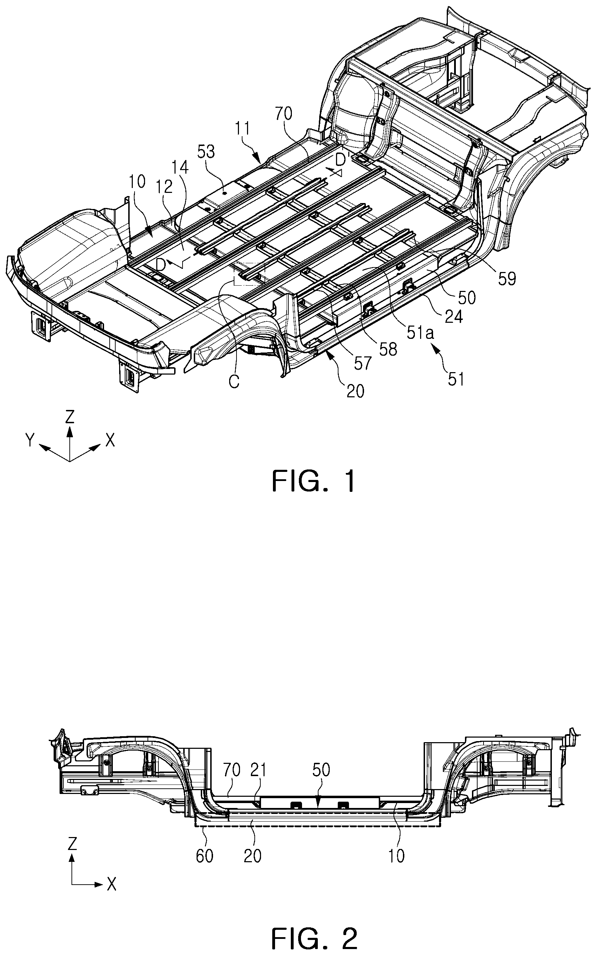

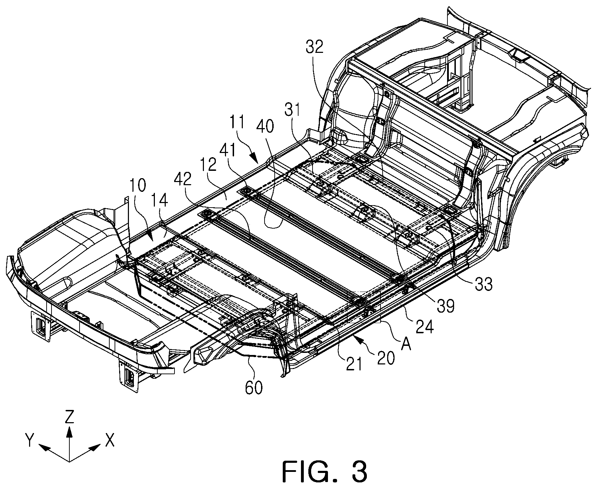

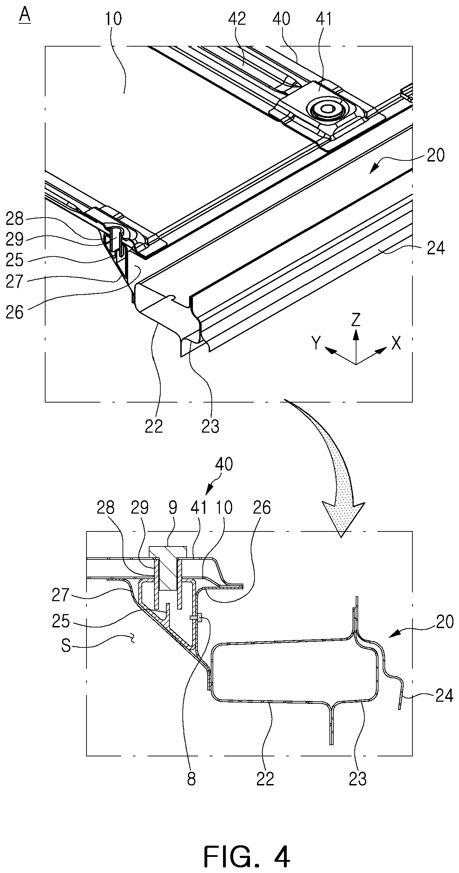

FIG. 1 is a perspective view illustrating a main part of a vehicle according to an embodiment of the present disclosure. FIG. 2 is a side view of FIG. 1. FIG. 3 is a perspective view illustrating a main part of a vehicle, in which a ramp apparatus and a seat rail in FIG. 1 are omitted, according to an embodiment of the present disclosure. FIG. 4 is a perspective view and an enlarged cross-sectional view illustrating part A of FIG. 3 cut away.

As illustrated in FIGS. 1 to 4, a vehicle according to an embodiment of the present disclosure may include: a floor panel 10; a battery module 60, a ramp apparatus 50, and a plurality of seat rails 70, any of, any combination of, or all of which may be in plural or may include plural components thereof.

The vehicle may include a vehicle body, and the vehicle body may be manufactured in various shapes and sizes. The skeletal structure of the vehicle body may include a pair of side sills 20 extending in the longitudinal direction (X) of the vehicle and forming a side surface of the vehicle body, and a plurality of cross members 31 and 32 extending in the width direction (Y) of the vehicle and coupled to both side sills.

A pair of side sills 20 may be disposed on the left and right sides of the lower portion of the vehicle body, and the pair of side sills may be spaced apart from each other along the width direction (Y) of the vehicle. These side sills may perform the function of protecting the passenger space in the event of a side collision of the vehicle while forming part of the appearance of the vehicle side.

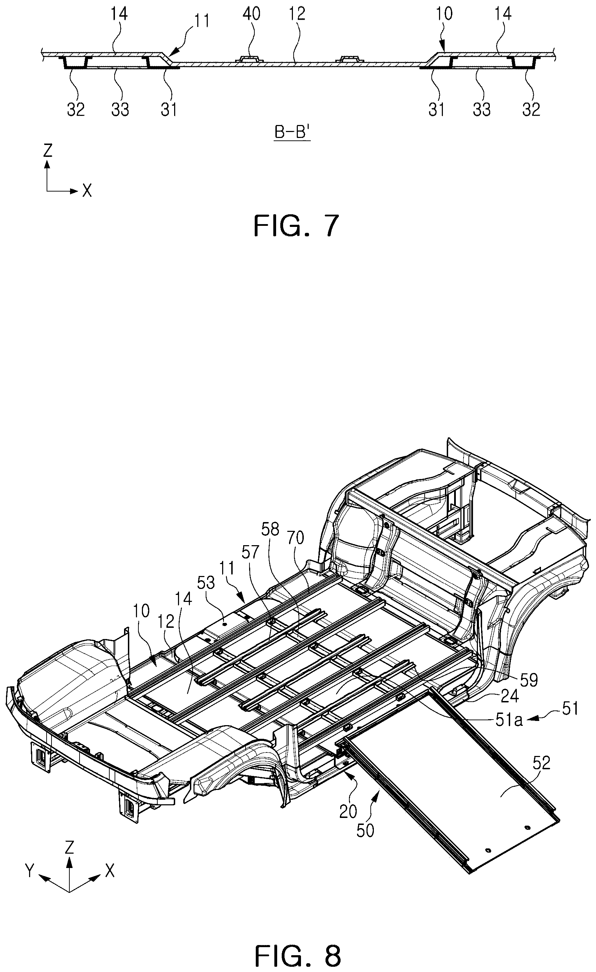

At least one of the pair of side sills 20 may have a concave portion 21 in which the upper surface is formed lower than the surroundings in the middle portion. The concave portion 21 may be located below a door (not illustrated) of the vehicle. The space created by the concave portion 21 may be used for a platform 52 (see FIG. 8) of the ramp apparatus 50 to enter and move.

The side sill 20 may include a side sill inner panel 22, a side sill outer reinforcement 23, and a side sill outer panel 24.

The side sill inner panel 22 may be joined to one side of the side sill outer reinforcement 23. The side sill outer reinforcement 23 may be joined to the side sill inner panel 22 to form a closed section. By forming a closed section, the rigidity of the side sill 20 may be reinforced, so that the collision load may be attenuated when the vehicle is lateral-collided.

The side sill outer panel 24 may be joined to the other side of the side sill outer reinforcement 23.

The side sill 20 may be joined as a single piece by welding the side sill inner panel 22, the side sill outer reinforcement 23, and the side sill outer panel 24 in three layers on the lower end portion or upper end portion thereof.

The upper end portion or lower end portion of the side sill 20 may include a sealer (not illustrated) in the longitudinal direction (X) of the vehicle to form sealing.

In a vehicle according to an embodiment of the present disclosure, each side sill 20 may further include a reinforcing side member 25 connected to the side sill inner panel 22, a side sill extension 26 interposed between the side sill inner panel 22 and the reinforcing side member 25, and an inclined panel 27 adjacent or partially surrounding the reinforcing side member 25.

The reinforcing side member 25 may be formed by extrusion using, for example, aluminum or an aluminum alloy as a material. The reinforcing side member 25 may have a bulkhead structure inside to have a plurality of closed sections. The plurality of closed sections can supplement the support stiffness of the reinforcing side member itself, and enable the reinforcing side member 25 to directly receive and withstand impact when the vehicle is hit from the side.

The reinforcing side member 25 may be connected to the inner surface of the side sill inner panel 22 in the width direction (Y) of the vehicle, for example, the surface thereof opposite to the side sill outer reinforcement 23, via the side sill extension 26.

This reinforcing side member 25 may reinforce the rigidity of the side sill 20 whose cross-sectional size in the vertical direction (for example, in the height direction (Z) of the vehicle) is reduced due to the concave portion 21. The reinforcing side member may support the deformation of the side sill inner panel 22 inward in the width direction (Y) of the vehicle when the vehicle is subjected to a side collision, while absorbing the collision load by being deformed together with the side sill inner panel 22.

The reinforcing side member 25 may secure rigidity not only for the impact energy acting in the lateral direction of the side sill 20, but also for the impact energy acting in the longitudinal direction (X) of the vehicle.

By the reinforcing side member 25 configured and disposed in this way, the amount of the side sill 20 introduced inwardly may be minimized in the event of a side collision of the vehicle, so that the vehicle can have an advantage of being able to safely protect passengers.

In a vehicle according to an embodiment of the present disclosure, the reinforcing side member 25 of the side sill 20 may be bolted to the floor panel 10, the reinforcing cross member 40, and the ramp apparatus 50.

In an embodiment of the present disclosure, the pair of side sills 20 can be the same in shape (though mirror symmetrical for the left and right sides) or may have different shapes (e.g., one side sill with a concave portion and the other side sill without a concave portion) (i.e., the left side sill can have a different structure/shape/configuration than the right side sill), for example.

To couple the reinforcing side member 25 with the floor panel 10, the reinforcing cross member 40, and the ramp apparatus 50, the reinforcing side member may be equipped with a pipe nut 29.

A through-hole 28 may be formed in the upper surface of the reinforcing side member 25, to which a pipe nut 29 may be fitted and welded, but the present disclosure is not necessarily limited thereto, and the reinforcing side member and the pipe nut may be formed integrally.

The pipe nut 29 can be a member for fastening the floor panel 10, the reinforcing cross member 40, and the ramp apparatus 50 together to the reinforcing side member 25 by a bolt 9. This pipe nut 29 can be installed on the reinforcing side member 25 and may be disposed to protrude from the upper surface of the reinforcing side member. A hollow screw hole may be formed in the pipe nut 29 in the longitudinal direction thereof.

The pipe nut 29 may penetrate the floor panel 10 and reach the inner surface of the mounting portion **41** provided on the reinforcing cross member 40. The bolt 9 inserted inside the ramp apparatus 50 may be inserted and fastened to the pipe nut 29 by sequentially penetrating a lower case 51b of the ramp apparatus 50, the mounting portion of the reinforcing cross member 40, and the floor panel 10.

A tool hole 55 into which a tool may be inserted for tightening the bolt 9 may be formed in the upper surface of an upper case 51a for a housing 51 of the ramp apparatus 50.

The side sill extension 26 may be formed of a plate having a cross-sectional shape bent into an inverted L shape. The lower end portion of the side sill extension 26 may be joined to the side sill inner panel 22 by welding, such as spot welding.

The reinforcing side member 25 formed of an extruded material can be formed of a different material from that of the side sill inner panel 22 and/or the side sill extension 26, and thus, in such case, they would not be directly connected to each other by a weld joining such as spot welding.

Accordingly, the reinforcing side member 25 may be substantially connected to the side sill inner panel 22 and the side sill 20 by being coupled to the side sill extension 26 by a heteromaterials joining member 8, such as a flow drill screw (FDS) or the like, for example.

The upper end portion of the side sill extension 26 can be formed horizontally by folding and may be joined to the lower surface of the floor panel 10 by welding, such as spot welding.

The inclined panel 27 may partially surround the reinforcing side member 25 from the inside in the width direction (Y) of the vehicle while connecting the side sill 20 and the floor panel 10.

The upper end portion of the inclined panel 27 can be formed horizontally by folding and may be joined to the lower surface of the floor panel 10 by welding, such as spot welding, and the lower end portion of the inclined panel 27 can be formed vertically by folding and may be joined to the outer side surface of the side sill inner panel 22 by welding, such as spot welding.

Adhesive can be applied to the outer surface of the inclined surface provided on the reinforcing side member 25, so that the inclined panel 27 and the reinforcing side member 25 may be joined.

The side sill extension 26 and the inclined panel 27 may form an additional side sill located further inwardly in the width direction (Y) of the vehicle than the side sill 20. Or, side sill extension 26 and the inclined panel 27 may form an additional, more-inwardly side sill portion of side sill 20.

Therefore, the side sill 20 may be coupled to the floor panel 10 and installed on the vehicle body via the reinforcing side member 25, the side sill extension 26, and the inclined panel 27.

The floor panel 10 may be disposed between a pair of side sills 20. The floor panel may partition a passenger space where passengers board.

In detail, the floor panel 10 may be coupled to the side sills 20 by welding at least the left and right edges of the floor panel to the side sill extensions 26 of respective side sills 20, for example.

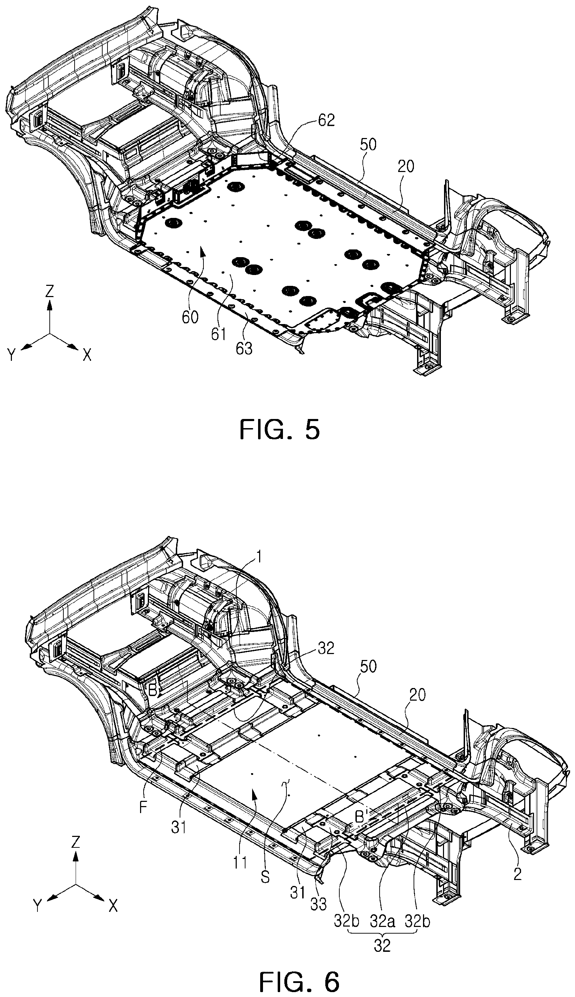

FIG. 5 is a perspective view of FIG. 1 as viewed from below. FIG. 6 is a perspective view the same as FIG. 5 but with the battery of FIG. 5 omitted. FIG. 7 is a cross-sectional view taken along line B-B' of FIG. 6.

Referring to FIGS. 5 to 7, in a vehicle according to an embodiment of the present disclosure, the floor panel 10 may include a recess portion 11 formed concavely downward.

The floor panel 10 having the recess portion 11 may be made of a metal material such as steel, for example, and may be shaped by forming using a press, bending, roll forming, combinations thereof, or the like.

The recess portion 11 may have a cross-sectional shape of approximately U or an inverted trapezoid. By use of this recess portion 11, the floor panel 10 may be formed stepwise in the longitudinal direction (X) of the vehicle.

For convenience of explanation, the bottom surface of the recess portion 11 can be referred to as a first flat surface 12, and the upper surface of the floor panel 10 other than the recess portion 11 can be referred to as a second flat surface 14. The floor panel 10 may have one first flat surface 12 and one pair of second flat surfaces 14 due to the two-step stepped shape.

The recess portion 11 may have a depth equal to or deeper than the depth of the concave portion 21 formed in the side sill 20. The recess portion 11 may have a depth equal to the height of the housing 51 of the ramp apparatus 50.

As a result, the ramp apparatus 50 may be stably seated in the recess portion 11, and can be non-interfered with or non-hindered during the operation of the ramp apparatus.

Because the ramp apparatus 50 can be positioned in the recess portion 11 and can be disposed downward relative to the second flat surfaces 14, the inclination of the platform 52 may satisfy an inclination of a regulation without increasing a step height. Accordingly, a vehicle according to an embodiment of the present disclosure may maintain and/or improve the convenience of passengers getting on and off the vehicle.

The battery module 60 may be disposed in the middle of the vehicle in the longitudinal direction (X) of the vehicle and in the lower part of the vehicle in the height direction (Z). To this end, a battery space (S) in which the battery module 60 can be mounted may be provided in the vehicle body.

For example, the battery module 60 may include one or more battery cells (not illustrated) capable of being charged and discharged, a battery case 61 that accommodates the battery cells, and a cover 62 that covers the upper portion of the battery case. Because the configuration of the battery module 60 can be already widely known, a detailed description of the configuration of the battery module is omitted in this specification, and the battery module is described and illustrated as a single component (to simplify the illustration).

A floor panel 10 may be installed above the battery space (S). In detail, the battery module 60 may be mounted on a pair of side sills 20 to be disposed below the floor panel 10.

In detail, for example, side flanges 63 may be provided on both sides of the battery case 61, respectively, and each side flange can be coupled to the lower surface of the side sill inner panel 22 of the corresponding side sill 20 through bolting or the like, so that the battery module 60 may be mounted on a pair of side sills 20.

As illustrated in FIGS. 6 and 7, a plurality of cross members 31 and 32 may be coupled to the side surface of the side sill 20 (for example, coupled to the inclined surface of the inclined panel 27) and the lower surface of the floor panel 10 at intervals from the front end to the rear end of the vehicle body.

The plurality of cross members may include a pair of first cross members 31 and a pair of second cross members 32, which can be distinguished depending on whether or not they are coupled to the ramp apparatus 50 or positions thereof.

The first cross member 31 may be disposed adjacent to the ramp apparatus 50 so that the ramp apparatus 50 may be coupled. The second cross member 32 may be spaced outwardly from the ramp apparatus 50 and the first cross member 31 in the longitudinal direction (X) of the vehicle and disposed parallel to the first cross member 31.

The plurality of cross members 31 and 32 may each be formed as a member formed of a single plate having a cross-sectional shape that is bent or curved to have an open cross-section, for example, or a member formed by joining two or more plates in the longitudinal direction thereof, for example, in the width direction (Y) of the vehicle. However, the present disclosure is not necessarily limited thereto, and the cross member 31, 32 may be provided as a tubular member having a hollow portion therein and/or a cross-sectional shape of a polygon having four or more corners.

For example, the first cross member 31 may have an open cross-section having an approximately L-shaped shape, and the second cross member 32 may have an open cross-section having an approximately U-shaped shape.

Optionally, first flange surfaces may be formed on both ends of the cross members 31 and 32 in the longitudinal direction, for example, on both ends thereof in the width direction (Y) of the vehicle. Each first flange surface may be inclined corresponding to the inclined surface of the inclined panel 27 of the side sill 20. The first flange surface may be joined to the outer surface of the inclined surface of the inclined panel by welding, such as spot welding, laser welding, or arc welding using carbon dioxide or the like.

A second flange surface may be formed on edges extended in the longitudinal direction of the cross members 31 and 32 to connect the cross members to the floor panel 10. The second flange surface may be joined to the lower surface of the floor panel 10 by welding, such as spot welding, laser welding, or arc welding using carbon dioxide or the like.

The plurality of cross members 31 and 32 may reinforce the rigidity of the vehicle body against the collision load entering in the longitudinal direction of the cross member due to the folded cross-sectional shape of the cross members.

Furthermore, the reinforcing side members 25 of a pair of side sills 20 and a pair of second cross members 32 connecting these reinforcing side members may form a quadrangular skeletal structure. A pair of first cross members 31 can be disposed within the quadrangular skeletal structure, so that the skeletal structure may be further strengthened.

This quadrangular skeletal structure can increase the rigidity of the vehicle body and act as a load path that transmits the collision load when the vehicle collides, thereby responding to the collision and reducing the deformation of the vehicle body.

The vehicle body may further include a plurality of inner side members 33 that extend in the longitudinal direction (X) of the vehicle, between a pair of side sills 20, and connect the first cross member 31 and the second cross member 32.

Each of the plurality of inner side members 33 may be formed of a single plate having a cross-sectional shape that is bent or curved to have an open cross-section, for example, but is not necessarily limited thereto. For example, each inner side member 33 may have an open cross-section having an approximately U-shaped shape.

For example, based on the ramp apparatus 50, a pair of inner side members 33 may be positioned on one side of the ramp apparatus, and another pair of inner side members 33 may be positioned on the other side of the ramp apparatus.

The inner side member 33 on one side of the ramp apparatus 50 and the inner side member 33 on the other side of the ramp apparatus may be aligned in the longitudinal direction (X) of the vehicle, but are not directly connected to each other. In detail, the ramp apparatus 50 may be positioned between the inner side members 33 aligned in the longitudinal direction of the vehicle.

When the vehicle is subjected to a side collision, the collision load transmitted to the cross members 31 and 32 may be transmitted to the corresponding inner side members 33 mechanically connected to the cross members, and may be distributed along the inner side members in the longitudinal direction (X) of the vehicle. Therefore, the inner side members 33 may increase the durability and rigidity of the vehicle body, thereby minimizing deformation of the vehicle body during a side collision.

For example, when one side of the vehicle in the longitudinal direction (X) is referred to as the front and the other side thereof in the longitudinal direction is referred to as the rear, for distinction, the vehicle body may include a pair of front side members 1 extended from a second cross member 32 on one side and a pair of rear side members 2 extended from a second cross member on the other side.

The inner side member 33 on one side may be aligned and connected to the front side member 1 in the longitudinal direction (X) of the vehicle, and the inner side member 33 on the other side may be aligned and connected to the rear side member 2 in the longitudinal direction of the vehicle.

Optionally, a first flange surface may be formed on one end of the inner side member 33 in the longitudinal direction (for example, in the longitudinal direction (X) of the vehicle). The first flange surface may be joined to the lower surface of the first cross member 31 by welding, such as spot welding, laser welding, arc welding using carbon dioxide or the like.

A second flange surface may be formed on an edge of the inner side member 33 extending in the longitudinal direction of the inner side member 33 (for example, the longitudinal direction (X) of the vehicle), for joining the inner side member to the floor panel 10. The second flange surface may be joined to the lower surface of the floor panel 10 by welding, such as spot welding, laser welding, arc welding using carbon dioxide or the like.

In the case where the vehicle body includes a plurality of inner side members 33, the second cross member 32 among the cross members may include one middle portion 32a and a pair of split portions 32b spaced apart from each other on both sides of the middle portion in the longitudinal direction thereof.

A first flange surface may be formed on both ends of the middle portion 32a in the longitudinal direction (for example, the width direction (Y) of the vehicle). Each first flange surface may be joined to the lower surface of the inner side member 33 by welding, such as spot welding, laser welding, arc welding using carbon dioxide or the like.

A second flange surface may be formed on an edge of the middle portion extending in the longitudinal direction of the middle portion 32a (for example, the width direction (Y) of the vehicle) to join the middle portion to the floor panel 10. The second flange surface may be joined to the lower surface of the floor panel by welding, such as spot welding, laser welding, arc welding using carbon dioxide or the like.

A first flange surface may be formed on both ends of each split portion 32b in the longitudinal direction (for example, the width direction (Y) of the vehicle). The first flange surface on one side may be joined to the inclined surface of the inclined panel 27 of the side sill 20, and the first flange surface on the other side may be joined to the lower surface of the inner side member 33 by welding, such as spot welding, laser welding, arc welding using carbon dioxide or the like.

Likewise, a second flange surface may be formed on an edge of each split portion 32b extending in the longitudinal direction of each split portion 32b (for example, the width direction (Y) of the vehicle), for joining the split portion to the floor panel 10. The second flange surface may be joined to the lower surface of the floor panel 10 by welding, such as spot welding, laser welding, arc welding using carbon dioxide or the like.

The floor panel 10 may be disposed on the first cross member 31, the second cross member 32, and the inner side member 33, and may be joined to the first cross member, the second cross member, and the inner side member by welding and/or bolting, or the like. The recess portion 11 may be positioned between a pair of the first cross members 31.

A vehicle according to an embodiment of the present disclosure may include at least one reinforcing cross member 40 installed on the floor panel 10 and having both ends coupled to the side sills 20 respectively.

The reinforcing cross member 40 may extend across the floor panel 10 along the width direction (Y) of the vehicle on the first flat surface 12 in the recess portion 11 of the floor panel. In detail, the reinforcing cross member 40 may be disposed on the floor panel 10, between the pair of first cross members 31 and parallel to the first cross members.

The reinforcing cross member 40 may be formed as a single plate having a cross-sectional shape that is bent or curved to have an open cross-section, for example. However, the present disclosure is not necessarily limited thereto, and the reinforcing cross member 40 may also be provided as a tubular member having a hollow portion therein and a cross-sectional shape of a polygon having four or more corners.

For example, the reinforcing cross member 40 may have an open cross-section of an approximately inverted U shape.

Optionally, a flange surface may be formed on an edge extending in the longitudinal direction (for example, the width direction (Y) of the vehicle) of the reinforcing cross member 40 for joining the reinforcing cross member to the floor panel 10. As a result, the reinforcing cross member 40 may have a hat-shaped cross-sectional shape. The flange surface may be joined to the upper surface of the floor panel 10 by welding, such as spot welding, laser welding, or arc welding using carbon dioxide or the like.

Mounting portions 41 having a bolt hole may be provided on both ends of the longitudinal direction (for example, the width direction (Y) of the vehicle) of the reinforcing cross member 40. Through these mounting portions, the ramp apparatus 50 may be coupled to the reinforcing side member 25 of the side sill 20.

For example, the mounting portions 41 may be formed with a different cross-sectional shape and/or a different material from that of the reinforcing cross member 40. The mounting portion 41 may be formed separately and then joined to the reinforcing cross member 40 by, for example, welding, but is not necessarily limited thereto.

As described above, the bolt 9 inserted inside the ramp apparatus 50 can penetrate the mounting portion 41 of the reinforcing cross member 40 and can be inserted and fastened to the pipe nut 29 provided on the reinforcing side member 25 of the side sill 20, so that the reinforcing cross member 40 may be coupled to the side sill 20 together with the floor panel 10, and the ramp apparatus 50 may be firmly installed.

In summary, the reinforcing cross member 40 may be coupled to the floor panel 10 by welding, and at the same time, may be coupled to the side sill 20 by bolting, together with the floor panel 10. As a result, at least one reinforcing cross member 40 is disposed within the quadrangular skeletal structure described above, so that the skeletal structure may be further strengthened.

The quadrangular skeletal structure reinforced in this way can increase the rigidity of the vehicle body, and act as a load path that transmits the collision load when the vehicle collides, so that it may respond to the collision and reduce the deformation of the vehicle body.

Therefore, in a vehicle according to an embodiment of the present disclosure, the ramp apparatus 50 may be coupled to the floor panel 10 via the mounting portion 41 of the reinforcing cross member 40 and may be connected and fixed to the vehicle body, for example, a pair of reinforcing side members 25.

A bead portion 42 extending in the longitudinal direction of the reinforcing cross member 40 (for example, the width direction (Y) of the vehicle) may be formed on the upper surface of the reinforcing cross member 40. The bead portion 42 may be formed as a concave channel or a convex protrusion.

The depth or height of the bead portion 42, for example, the depth of the channel or the height of the protrusion, may be variable, and the depth of the channel may become shallower or the height of the protrusion may become lower as it goes toward the end of the reinforcing cross member 40.

Accordingly, the middle portion of the reinforcing cross member 40 may have an approximately M-shaped cross-sectional shape, and the upper surface of both ends thereof may gradually become flat to show a simple hat-shaped cross-sectional shape.

In addition to the folded cross-sectional shape, by forming the bead portion 42, the reinforcing cross member 40 may reinforce the rigidity of the vehicle body against a collision load entering in the longitudinal direction of the reinforcing cross member (for example, the width direction (Y) of the vehicle).

In a case in which a side collision of a vehicle occurs, when the collision load input to the side sill 20 is transmitted to the reinforcing cross member 40, the reinforcing cross member may play a role as a member supporting the collision load together with the plurality of cross members 31 and 32.

Therefore, the reinforcing cross member may further improve the safety against the side collision, minimize the deformation of the vehicle body, the ramp apparatus 50, and the battery module 60 during the side collision, and protect the ramp apparatus and the battery module.

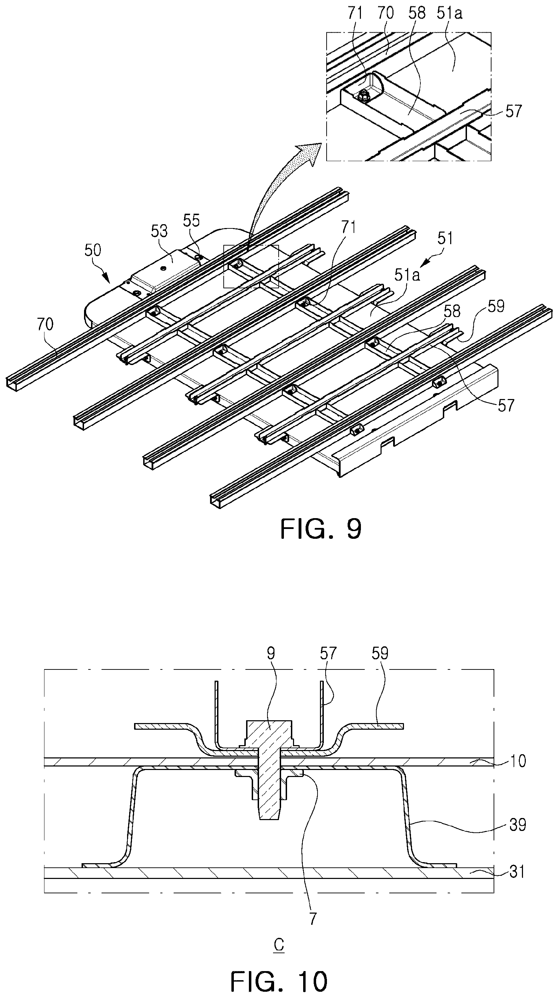

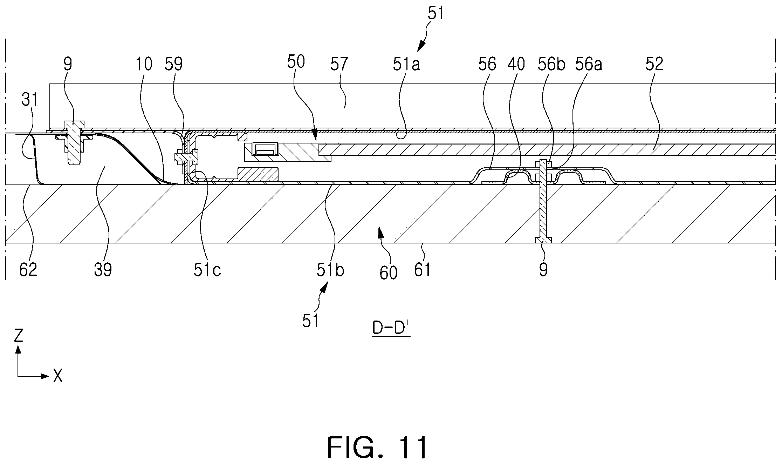

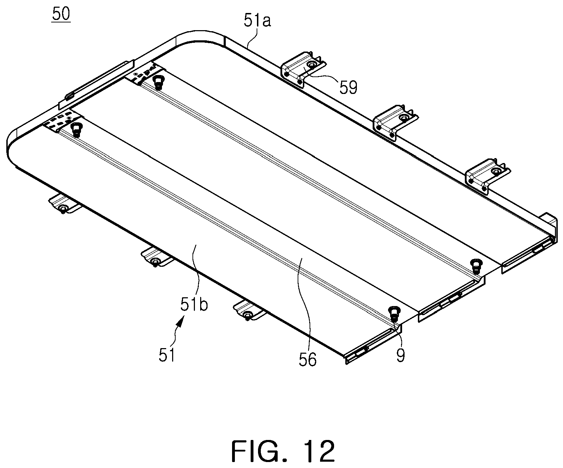

FIG. 8 is a diagram illustrating an operation status of a ramp apparatus according to an embodiment of the present disclosure. FIG. 9 is a perspective view illustrating a ramp apparatus and a seat rail according to an embodiment of the present disclosure. FIG. 10 is an enlarged cross-sectional view illustrating part C of FIG. 1. FIG. 11 is a cross-sectional view taken along line D-D' of FIG. 1. FIG. 12 is a perspective view of FIG. 9 viewed from below.

Referring to FIGS. 8 to 12, the ramp apparatus 50 may include a housing 51, a platform 52 that may move between a storage position within the housing and a deployed position outside the housing, and a drive portion 53 that can be installed in the housing and can apply driving force to the platform. The drive portion 53 may include a motor, a reducer, and the like.

The ramp apparatus 50 may further include a power transmission mechanism (not illustrated) that can be interposed between the drive portion 53 and the platform 52, and can transmit the driving force of the drive portion to the platform. As the power transmission mechanism, for example, a mechanism having a pair of sprockets and a chain, or a mechanism having a gear and a lead screw, or the like may be employed, but the present disclosure is not necessarily limited thereto.

The ramp apparatus 50 configured in this manner may be installed in the recess portion 11 of the floor panel 10 and fixedly coupled to the floor panel. When the driving force of the drive portion 53 is transmitted to the platform 52 via the power transmission mechanism, the platform may be withdrawn from the housing 51 and disposed in the deployed position with one end touching the ground. Then, when the drive portion 53 is operated in an opposite direction, the platform 52 may be drawn into the housing 51 and disposed in the storage position.

In this specification, for the convenience of explanation, a more detailed description of the configuration and operation of the ramp apparatus 50 will be omitted. Instead, the description will focus on the coupling relationship between the ramp apparatus 50 and the vehicle body.

The housing 51 may accommodate components of the ramp apparatus 50, such as the platform 52, the drive portion 53, and the like. The housing 51 may be equipped with an upper case 51a and a lower case 51b.

The housing 51 may include a plurality of reinforcing rails 57 coupled to the upper surface of the upper case 51a, and a plurality of connecting rails 58 coupled to the upper surface of the upper case on both sides of each reinforcing rail.

The reinforcing rail 57 may be formed of a single plate having a cross-sectional shape that is bent or curved to have an open cross-section, for example, but the present disclosure is not necessarily limited thereto. For example, the reinforcing rail 57 may have an open cross-section having a shape of a roughly inverted hat.

The reinforcing rail 57 may have a length longer than the length of the width direction (for example, the longitudinal direction (X) of the vehicle) of the housing 51. Accordingly, the reinforcing rail may extend across the housing 51, and furthermore, ends of the reinforcing rail 57 may protrude from the housing 51 in the longitudinal direction of the vehicle, on both sides of the housing.

The reinforcing rail 57 may be coupled to the upper surface of the upper case 51a by welding, such as spot welding.

The connecting rail 58 may be formed of a single plate having a cross-sectional shape that is folded or bent to have an open cross-section, for example, but the present disclosure is not necessarily limited thereto. For example, the connecting rail 58 may have an open cross-section having an approximately U-shaped shape.

A plurality of connecting rails 58 may be disposed symmetrically with respect to the corresponding reinforcing rail 57 on both sides of the reinforcing rail 57. A connecting rail 58 corresponding to one reinforcing rail 57 may be spaced apart from a connecting rail corresponding to another reinforcing rail by a set, selected, or predetermined distance. A seat rail 70 may be positioned in the space between these connecting rails 58 later.

This connecting rail 58 may first be bolted to the upper surface of the upper case 51a to determine a joining position, and then may be joined to the upper surface of the upper case by welding such as spot welding.

The plurality of reinforcing rails 57 may include, for example, at least two reinforcing rails. The drawings illustrate an example in which three reinforcing rails 57 are applied, but the number of reinforcing rails is not necessarily limited thereto. The longitudinal (for example, longitudinal direction (X) of the vehicle) ends of each reinforcing rail 57 may be bolted to the first cross member 31.

A mounting bracket 59 having a cross-sectional shape bent in an inverted L shape and having bolt holes formed therein may be welded to both sidewalls of the upper case 51a. Bolt holes may be formed in the longitudinal (for example, longitudinal direction (X) of the vehicle) ends of the reinforcing rail 57.

A plurality of bulkheads 39 may be provided at intervals from each other on the first cross member 31 for the connection of the reinforcing rail 57. Bolt holes may be formed in respective bulkheads 39. At least two bulkheads 39 may be positioned corresponding to the inner side members 33 on the first cross member 31.

As illustrated in FIGS. 10 and 11, a bolt 9 inserted from the inner surface of the reinforcing rail 57 may penetrate the reinforcing rail, the mounting bracket 59, the floor panel 10, and the bulkhead 39 of the first cross member 31 and be fastened to the nut 7.

For example, in the case where the vehicle body includes a pair of front side members 1 and a pair of rear side members 2 as described above, at least two reinforcing rails 57 can be respectively connected to the inner side members 33 arranged in series on both sides in the longitudinal direction (X) of the vehicle and spaced apart from each other, thereby being aligned with the front side member and the rear side member between the pair of first cross members 31 and connecting the front side member and the rear side member.

Accordingly, the plurality of reinforcing rails 57 may connect the load path between the front side member 1 and the rear side member 2 that are disconnected due to the recess portion 11 of the floor panel 10 and the ramp apparatus 50, thereby dispersing and transmitting the collision load and reducing the deformation of the vehicle body when the vehicle collides.

Therefore, in a vehicle according to an embodiment of the present disclosure, the ramp apparatus 50 may be coupled to the floor panel 10, and connected and fixed to the vehicle body, for example, to a pair of first cross members 31 and a plurality of inner side members 33, through the reinforcing rail 57 and the mounting bracket 59 fixed to the upper case 51a of the housing 51.

The ramp apparatus 50 may be provided with a guide rail 51c for movement of the platform 52 inside the housing 51. The guide rail 51c may be formed by extrusion using, for example, aluminum or an aluminum alloy as a material.

The guide rail 51c may be bolted to a mounting bracket 59 together with the side wall of the upper case 51a and the side wall of the lower case 51b constituting the housing 51 of the ramp apparatus 50.

The guide rail 51c can reinforce the rigidity of the ramp apparatus 50, support deformation of the housing 51 in the longitudinal direction (X) of the vehicle when the vehicle collides, and absorb a collision load while being deformed together with the housing.

Above the housing 51 of the ramp apparatus 50, in detail, on the upper surface of the upper case 51a, a plurality of seat rails 70 for installing the seat of the vehicle may be disposed to extend in the longitudinal direction (X) of the vehicle while crossing the housing of the ramp apparatus, along with a plurality of reinforcing rails 57.

The seat rail 70 may be formed of a single plate having a cross-sectional shape that is bent or curved to have an open cross-section, for example, but is not necessarily limited thereto. The seat rail 70 may have an open cross-section that is approximately U-shaped.

The seat rail 70 may have a length that is longer than a width-direction length (for example, the longitudinal direction (X) of the vehicle) of the housing 51, and may have a length that is longer than the length of the reinforcing rail 57.

Thus, the seat rail 70 may extend across the ramp apparatus 50, a pair of first cross members 31, a pair of second cross members 32, and the floor panel 10.

This seat rail 70 may be bolted to the upper surface of the upper case 51a. A connecting bracket 71 having a cross-sectional shape bent into an L shape and having bolt holes formed therein may be joined to both side surfaces of the seat rail 70 by welding, such as spot welding.

When the ramp apparatus 50 is settled in the recess portion 11 of the floor panel 10, the upper surface of the upper case 51a and the second flat surface 14 of the floor panel 10 may be disposed on a same plane at a same height from the ground.

Next, a plurality of seat rails 70 may be respectively positioned in the space between the aforementioned connecting rails 58 on the upper surface of the upper case 51a, and/or positioned parallel to the reinforcing rail 57 with the connecting rails interposed therebetween. Respective seat rails 70 may be connected to the upper surface of the upper case 51a by bolting via the connecting bracket 71.

The connecting bracket 71 may be inserted into the connecting rail 58, and may be coupled to the upper surface of the upper case 51a by bolting together with the connecting rail.

A plurality of seat rails 70 together with a plurality of reinforcing rails 57 and a plurality of connecting rails 58 may be disposed in a grid shape on the upper surface of the upper case 51a for the housing 51 of the ramp apparatus 50. Accordingly, the ramp apparatus 50 may be firmly fixed to the floor panel 10, and the durability and rigidity of the vehicle body, which can be disadvantaged due to the downward disposition of the ramp apparatus, may be supplemented, so that deformation of the vehicle body may be minimized while a collision load is distributed in the event of a side collision.

The housing 51 may include at least one channel portion 56 formed on the lower surface of the lower case 51b to accommodate a reinforcing cross member 40.

The lower case 51b having the channel portion 56 may be formed of a metal material such as steel, for example, and may be shaped by forming using a press, bending, roll forming, or combinations thereof.

The channel portion 56 may have a cross-sectional shape of an approximately inverted U. This channel portion may protrude from the lower case 51b into the interior of the housing 51.

The channel portion 56 may have a depth at least equal to the height of the reinforcing cross member 40. An adhesive may be applied to the horizontal outer surface of the channel portion 56 so that the reinforcing cross member 40 and the channel portion may be joined.

In the horizontal flat surface of the channel portion 56 protruding into the interior of the housing 51, the surface exposed toward the exterior of the housing can be referred to as the outer surface of the channel portion, and the surface located inside the housing can be referred to as the inner surface of the channel portion.

By accommodating a reinforcing cross member 40 disposed on the first flat surface 12 of the floor panel 10 within the channel portion 56 of the lower case 51b constituting the housing 51 of the ramp apparatus 50, the ramp apparatus may be stably installed within the recess portion 11. Also, by joining the outer surface of the channel portion 56 and the reinforcing cross member 40, the ramp apparatus may be prevented from moving in the longitudinal direction (X) of the vehicle.

Optionally, the channel portion 56 may include at least one insertion hole 56a and a nut portion 56b welded in a position corresponding to the insertion hole on the upper surface of the channel portion. A bolt 9 penetrating the battery module 60 and the reinforcing cross member 40 may be inserted and fastened into the insertion hole and the welded nut portion 56b.

Accordingly, when the side collision of the vehicle occurs, a collision load transmitted to the battery module 60 may be transmitted to a plurality of reinforcing rails 57 mechanically coupled to the ramp apparatus 50, and may be distributed in the longitudinal direction (X) to the width direction (Y) of the vehicle.

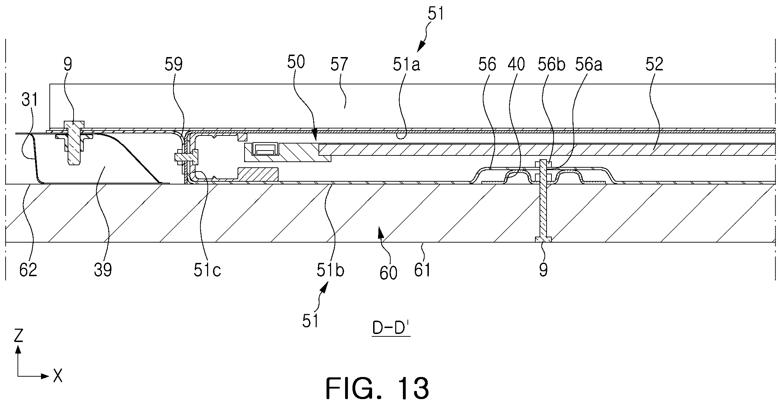

FIG. 13 is a cross-sectional view corresponding to FIG. 11, illustrating the main part of a vehicle according to another embodiment of the present disclosure.

A vehicle according to an embodiment of the present disclosure may include a battery module 60, a ramp apparatus 50, and a plurality of seat rails 70.

The embodiment illustrated in FIG. 13 is different only in that the floor panel 10 is omitted, and the remaining components are the same as the components of the embodiment illustrated in FIGS. 1 to 12. Accordingly, in describing the vehicle according to the embodiment of FIG. 13, the same reference numerals are given to the same components as those of the vehicle according to the embodiment of FIGS. 1 to 12 described above, and a detailed description of the configuration and function thereof is omitted.

Referring to FIG. 13, a vehicle according to an embodiment may include a battery module 60 disposed in the longitudinal-direction(X) middle and the height-direction(Z) lower part of the vehicle. A battery space (S) in which the battery module is mounted may be provided in the vehicle body.

For example, vehicles that use a motor as a driving source, such as hybrid vehicles or electric vehicles, can supply a large amount of power to the motor for a long period of time, and thus the battery module 60 can include a large number of battery cells, which can increase the volume thereof.

A cover 62 covering the upper part of a battery case 61 that accommodates the battery cells can be flat and can have a considerably large area, and may thus replace the floor panel 10.

Accordingly, in the vehicle according to an embodiment of the present disclosure, the floor panel 10 may be omitted, and components may be disposed on the cover 62 of the battery module 60.

The battery module 60 may be mounted on a pair of side sills 20. In detail, for example, side flanges 63 can be provided on both sides of the battery case 61, and each side flange can be coupled to the lower surface of the side sill inner panel 22 of the corresponding side sill 20 through bolting or the like, so that the battery module 60 may be mounted on a pair of side sills.

Thereby, the cover 62 of the battery module 60 may be positioned lower than the upper surface of the concave portion 21 of the side sill 20.

A plurality of cross members, for example, a pair of first cross members 31 and a pair of second cross members 32, may be coupled to the side surface of the side sill 20 (for example, the inclined surface of the inclined panel 27) and the upper surface of the cover 62 of the battery module 60 at intervals from the front end to the rear end of the vehicle body.

The cross members 31 and 32 may be welded to the upper surface of the cover 62, but are not necessarily limited thereto.

A plurality of inner side members 33 extending in the longitudinal direction (X) of the vehicle and connecting the first cross member 31 and the second cross member 32 may be welded to the upper surface of the cover 62, but is not necessarily limited thereto.

At least one reinforcing cross member 40 may be installed on the cover 62 of the battery module 60, and both ends thereof may be coupled to the side sills 20, respectively. The reinforcing cross member 40 may be disposed on the cover 62 in parallel with the first cross member 31, between a pair of first cross members 31.

The reinforcing cross member 40 may be welded to the upper surface of the cover 62, but is not necessarily limited thereto. Mounting portions 41 having a bolt hole may be provided on both ends of the reinforcing cross member 40 in the longitudinal direction (for example, in the width direction (Y) of the vehicle). Through these mounting portions 41, the ramp apparatus 50 may be connected to the reinforcing side member 25 of the side sill 20.

As described above, the bolt 9 can be inserted inside the ramp apparatus 50, and can penetrate the mounting portion 41 of the reinforcing cross member 40, and can be inserted and fastened to the pipe nut 29 provided on the reinforcing side member 25 of the side sill 20, thereby coupling the reinforcing cross member 40 to the side sill 20 and firmly mounting the ramp apparatus 50.

A bead portion 42 extending in the longitudinal direction of the reinforcing cross member 40 (for example, in the width direction (Y) of the vehicle) may be formed on the upper surface of the reinforcing cross member 40. The bead portion 42 may be formed as a concave channel or a convex protrusion.

Accordingly, the middle portion of the reinforcing cross member 40 may have an approximately M-shaped cross-sectional shape, and the upper surface of both ends thereof may gradually become flat, thereby providing a simple hat-shaped cross-sectional shape.

The ramp apparatus 50 can be positioned on the cover 62 of the battery module 60, and may be connected and fixed to the vehicle body, for example, a pair of reinforcing side members 25, via the mounting portion 41 of the reinforcing cross member 40.

The ramp apparatus 50 may be connected and fixed to the vehicle body, for example, a pair of first cross members 31 and a plurality of inner side members 33, via the reinforcing rail 57 and the mounting bracket 59 fixed to the upper case 51a of the housing 51.

A bolt 9 inserted from the inner surface of the reinforcing rail 57 may penetrate the reinforcing rail, the mounting bracket 59, and the bulkhead 39 of the first cross member 31, and be fastened to the nut.

The ramp apparatus 50 may be provided with a guide rail 51c for movement of the platform 52 inside the housing 51. The guide rail 51c may be formed of an extruded material and may be bolted to a mounting bracket 59 together with a side wall of the upper case 51a and a side wall of the lower case 51b constituting the housing 51 of the ramp apparatus 50.

Above the housing 51 of the ramp apparatus 50, for example, on the upper surface of the upper case 51a, a plurality of seat rails 70 (see FIG. 1) for installing seats of the vehicle may be disposed to extend across the housing of the ramp apparatus in the longitudinal direction (X) of the vehicle, along with a plurality of reinforcing rails 57.

The seat rail 70 may extend across the ramp apparatus 50, a pair of first cross members 31, and a pair of second cross members 32.

The seat rail 70 may be bolted to the upper surface of the upper case 51a constituting the housing 51 of the ramp apparatus 50.

The housing 51 may include at least one channel portion 56 formed on the lower surface of the lower case 51b to accommodate a reinforcing cross member 40.

By accommodating and joining the reinforcing cross member 40 positioned on the cover 62 of the battery module 60 within the channel portion of the lower case 51b constituting the housing 51 of the ramp apparatus 50, the ramp apparatus may be stably positioned on the cover, and the ramp apparatus may be prevented from moving in the longitudinal direction (X) of the vehicle.

Optionally, the channel portion 56 may include at least one insertion hole 56a and a nut portion 56b welded in a position corresponding to the insertion hole on the upper surface of the channel portion. A bolt 9 penetrating the battery module 60 may be inserted and fastened into the insertion hole 56a and the welded nut portion 56b.

As set forth above, according to an embodiment of the present disclosure, a ramp apparatus may be installed without interference with the layout of a battery module.

According to an embodiment of the present disclosure, rigidity of a vehicle body and support for side collisions may be reinforced.

According to an embodiment of the present disclosure, there can be an advantage in that an inclination of a platform may satisfy the inclination of a regulation without increasing a step height, and the convenience of boarding and disembarking passengers may be maintained and/or improved.

The above description is merely an example of technical ideas of the present disclosure, and those with ordinary knowledge in the technical field to which the present disclosure pertains may make various modifications and variations without departing from the essential characteristics and scopes of the present disclosure.

For example, the above-described and illustrated example embodiments may be combined with each other, and each embodiment may optionally adopt or replace some components of other embodiments. A number of example embodiments have been disclosed herein. It can be understood that various features of the different example embodiments can be combined for an embodiment of the present disclosure.

Accordingly, the example embodiments disclosed in this specification and drawings are not intended to necessarily limit the technical ideas of the present disclosure but to explain them. While example embodiments have been illustrated and described above, it can be apparent to those skilled in the art that modifications and variations could be made without departing from the scopes of the present disclosure as defined by the appended claims and equivalents thereof.

## Claims

1. A vehicle comprising:
a floor panel coupled to a pair of side sills spaced apart from each other;
a battery coupled to the pair of the side sills and positioned below the floor panel;
a ramp apparatus positioned on the floor panel and coupled to at least the side sills; and
a plurality of seat rails positioned on the ramp apparatus and coupled to the ramp apparatus.

2. The vehicle of claim 1, wherein the floor panel includes a recess portion extending concavely downward,
wherein at least one of the pair of side sills includes a concave portion having a side-sill upper surface being lower in a middle portion, and
wherein the ramp apparatus is seated in the recess portion.

3. The vehicle of claim 2, wherein the recess portion has a depth of a same dimension as a height of a housing of the ramp apparatus.

4. The vehicle of claim 2, wherein the floor panel comprises:
a first flat surface as a floor-panel bottom surface of the recess portion; and
a second flat surface as a floor-panel upper surface outside of the recess portion, wherein a ramp-apparatus upper surface of the ramp apparatus and the second flat surface are disposed at a same height from a ground.

5. The vehicle of claim 1, wherein the seat rails extend in a longitudinal direction of the vehicle across the ramp apparatus,
wherein the seat rails include connecting brackets on side surfaces of the seat rails, and
wherein the seat rails are coupled to the ramp apparatus via the connecting brackets.

6. The vehicle of claim 2, wherein the ramp apparatus comprises:
a housing;
a plurality of reinforcing rails connected to a housing upper surface of the housing; and
a plurality of connecting rails coupled to the housing upper surface of the housing on both sides of the reinforcing rails.

7. The vehicle of claim 6, wherein the seat rails are disposed on the housing upper surface of the housing, in parallel to the reinforcing rails, with the connecting rails interposed therebetween,
wherein the seat rails include connecting brackets on side surfaces of the seat rails,
wherein the connecting brackets are inserted into the connecting rails and are bolted to the housing, together with the connecting rails, and
wherein the seat rails, the reinforcing rails, and the connecting rails are disposed in a grid shape.

8. The vehicle of claim 6, further comprising a pair of first cross members coupled to a lower surface of the floor panel while connecting the pair of side sills,
wherein the recess portion is located between the pair of first cross members, and
wherein the reinforcing rails have ends protruding from the housing on both sides of the housing, and
wherein the ends of the reinforcing rails on both sides are coupled to the first cross members.

9. The vehicle of claim 8, wherein a side wall of the housing includes a mounting bracket having a mounting-bracket bolt hole therein,
wherein the first cross members include bulkheads having bulkhead bolt holes therein and spaced apart from each other, and
wherein the reinforcing rails, the mounting bracket, and the bulkheads are together bolted to the floor panel.

10. The vehicle of claim 9, wherein the housing comprises:
an upper case;
a lower case; and
a guide rail of an extruded material, wherein the guide rail is bolted to the mounting bracket together with an upper-case side wall of the upper case and a lower-case side wall of the lower case.

11. The vehicle of claim 2, further comprising at least one reinforcing cross member positioned in the recess portion on the floor panel and having both ends connected to the side sills, respectively.

12. The vehicle of claim 11, wherein the ramp apparatus includes a housing, and
wherein at least one channel portion on a lower surface of the housing receives the at least one reinforcing cross member, respectively.

13. The vehicle of claim 12, wherein the at least one channel portion includes an adhesive applied thereto, so that the reinforcing cross member and the channel portion are joined by the adhesive.

14. The vehicle of claim 12, wherein the at least one channel portion includes at least one insertion hole, and a nut portion welded in a position corresponding to each of the at least one insertion hole, and
wherein the nut portion is fastened to a bolt penetrating the battery and the reinforcing cross member.

## Amended claims

### Amended claims in accordance with Rule 137(2) EPC.

1. A vehicle comprising:
a floor panel (10) coupled to a pair of side sills (20) spaced apart from each other;
a battery coupled to the pair of the side sills and positioned below the floor panel (10);
a ramp apparatus (50) positioned on the floor panel (10) and coupled to at least the side sills; and
a plurality of seat rails (70) positioned on the ramp apparatus (50) and coupled to the ramp apparatus (50),
**characterized in that**
the seat rails (70) extend in a longitudinal direction of the vehicle across the ramp apparatus (50),
wherein the seat rails (70) include connecting brackets on side surfaces of the seat rails (70), and
wherein the seat rails (70) are coupled to the ramp apparatus (50) via the connecting brackets.

2. The vehicle of claim 1, wherein the floor panel (10) includes a recess portion (11) extending concavely downward,
wherein at least one of the pair of side sills (20) includes a concave portion (21) having a side-sill upper surface being lower in a middle portion, and
wherein the ramp apparatus (50) is seated in the recess portion (11).

3. The vehicle of claim 2, wherein the recess portion (11) has a depth of a same dimension as a height of a housing (51) of the ramp apparatus (50).

4. The vehicle of claim 2, wherein the floor panel (10) comprises:
a first flat surface (12) as a floor-panel bottom surface of the recess portion (11); and
a second flat surface (14) as a floor-panel upper surface outside of the recess portion (11), wherein a ramp-apparatus upper surface of the ramp apparatus (50) and the second flat surface are disposed at a same height from a ground.

5. The vehicle of claim 2, wherein the ramp apparatus (50) comprises:
a housing (51);
a plurality of reinforcing rails (57) connected to a housing upper surface of the housing (51); and
a plurality of connecting rails (58) coupled to the housing upper surface of the housing (51) on both sides of the reinforcing rails (57).

6. The vehicle of claim 5, wherein the seat rails (70) are disposed on the housing upper surface of the housing (51), in parallel to the reinforcing rails (57), with the connecting rails (58) interposed therebetween,
wherein the seat rails (70) include connecting brackets on side surfaces of the seat rails (70),
wherein the connecting brackets are inserted into the connecting rails (58) and are bolted to the housing (51), together with the connecting rails (58), and
wherein the seat rails (70), the reinforcing rails (57), and the connecting rails (58) are disposed in a grid shape.

7. The vehicle of claim 5, further comprising a pair of first cross members (31) coupled to a lower surface of the floor panel (10) while connecting the pair of side sills (20),
wherein the recess portion (11) is located between the pair of first cross members (31), and
wherein the reinforcing rails (57) have ends protruding from the housing (51) on both sides of the housing (51), and
wherein the ends of the reinforcing rails (57) on both sides are coupled to the first cross members.

8. The vehicle of claim 7, wherein a side wall of the housing (51) includes a mounting bracket (59) having a mounting-bracket bolt hole therein,
wherein the first cross members (31) include bulkheads having bulkhead bolt holes therein and spaced apart from each other, and
wherein the reinforcing rails (57), the mounting bracket (59), and the bulkheads are together bolted to the floor panel (10).

9. The vehicle of claim 8, wherein the housing (51) comprises:
an upper case (51a);
a lower case (51b); and
a guide rail (51c) of an extruded material, wherein the guide rail (51c) is bolted to the mounting bracket (59) together with an upper-case side wall of the upper case (51a) and a lower-case side wall of the lower case (51b).

10. The vehicle of claim 2, further comprising at least one reinforcing cross member (40) positioned in the recess portion (11) on the floor panel (10) and having both ends connected to the side sills, respectively.

11. The vehicle of claim 10, wherein the ramp apparatus (50) includes a housing (51), and
wherein at least one channel portion (56) on a lower surface of the housing (51) receives the at least one reinforcing cross member (40), respectively.

12. The vehicle of claim 11, wherein the at least one channel portion (56) includes an adhesive applied thereto, so that the reinforcing cross member (40) and the channel portion (56) are joined by the adhesive.

13. The vehicle of claim 11, wherein the at least one channel portion (56) includes at least one insertion hole (56a), and a nut portion (56b) welded in a position corresponding to each of the at least one insertion hole (56a), and
wherein the nut portion (56b) is fastened to a bolt penetrating the battery and the reinforcing cross member (40).
